# EUROPEAN PATENT APPLICATION

(11) **EP 2 003 839 A1**
(43) Date of publication of application: **17.12.2008**
(21) Application number: 07109901.4
(22) Date of filing: 08.06.2007
(51) Int. Cl.: H04L 29/06, H04Q 7/38

(54) **Methods, devices, system and related computer program product for key change**

(71) Applicant: Nokia Siemens Networks Oy, 02610 Espoo (FI)
(72) Inventor: Blommaert, Marc, 9140 Temse (BE); Forsberg, Dan, 00210 Helsinki (FI); Niemi, Valtteri, 00180 Helsinki (FI); Vuolteenaho, Merja, 00150 Helsinki (FI)
(74) Representative: TBK-Patent

(57) **Abstract**

It is disclosed a method comprising transceiving a stream of consecutive data packets based on first key information, detecting a need for an imminent change from the first key information to second key information, generating, based on the detected need for the imminent change, indication information indicating a specific value of the consecutive data packets from which onward the transceiving of the stream of consecutive data packets is to be based on second key information, sending the generated indication information, and transceiving the stream of consecutive data packets based on the indication information and the second key information. There is also disclosed a method comprising the above first transceiving, receiving indication information indicating a specific value of the consecutive data packets from which onward the transceiving of the stream of consecutive data packets is to be based on second key information, and the above second transceiving.

## Description

### FIELD OF THE INVENTION

The present invention relates to methods, apparatuses, a system and a related computer program product for key change. In particular, the present invention relates to LTE (long term evolution), key management, and user plane.

### BACKGROUND

In 3GPP (3^{rd} Generation Partnership Project), there have been discussions related to key change.

a) One option for such key change resides in changing keys when forcing a state transition via an intermediate state (but staying in the same cell), e.g. active-to-idle and idle-to-active state transitions (idle being the intermediate state) and thus implicitly taking new keys into use as implied by a state transition to active.

b) An alternative resides in marking packets that are using different keys (e.g. bit indicator(s) on the packet header field), i.e. using KSIs (Key Set Identifier) together with every packet. In other words, a new field (i.e. KSI) indicating the key used for protecting the data packet is added to each data packet.

c) A further alternative resides in a handover procedure to the same cell where the new intra-cell bearer applies the new keys.

In view of the above, when considering e.g. a UE (User Equipment) performing an inter-RAT (radio access technology) handover from UTRAN/GERAN (UMTS (Universal Mobile Telecommunications System) Terrestrial Radio Access Network / GSM (Global System for Mobile communication) EDGE (Enhanced Data rates for Global Evolution) Radio Access Network) to LTE, it is necessary to update all keys immediately, e.g. within seconds. However, there is no mechanism currently e.g. in LTE or UMTS/GSM for solving this problem. This requirement was discussed e.g. for UMTS, but adequate solutions were not found. Furthermore, the need for a solution in the light of UMTS was not as important as e.g. for LTE. Reasons reside in lower bit rates for UMTS and a difference e.g. in expected LTE usage scenarios. The following scenario may also be conceived: UEs are used without being moved e.g. in the home or with being integrated into a (e.g. fixed) machine, while the UEs may keep a session active e.g. for a very long time such that a key change may become necessary in order to preserve security of the ongoing active session. In other words, the UE must be able to change keys for user plane packets with minimal effects on the active session (e.g. delay to the user plane itself). However, the UE has no information on which user plane and control plane (RRC) data packets are ciphered with old keys and which data packets with new keys.

In addition, with respect to the maximum possible service break that can be allowed for the transported service, e.g. VoIP (Voice over Internet Protocol) may be considered as one of the most critical services.

In order to provide the desirable quality of service e.g. for interactive VoIP and streaming data packet traffic during handoff, the values of end-to-end delay, data packet delay variation (so-called "jitter") and packet loss have to be limited to or below a certain threshold level. For example, ITU-T (International Telecommunications Union - Telecommunication Standardization Sector) and ITU-R (ITU - Radio Communication Standardization Sector) standards define the acceptable values for these parameters. For one-way delay, ITU-T G.114 recommends 150 ms as the upper limit for most of the applications, and 400 ms as generally unacceptable delay. One way delay tolerance for video conferencing is in the range of 200 to 300 ms. Furthermore, if an out-of-order packet is received after a certain threshold, it is considered lost. The performance requirement will vary based on the type of application and its characteristics such as delay tolerance and loss tolerance limit. Interactive traffic such as VoIP and streaming traffic will have different tolerance for delay and packet loss. For example, according to ETSI (European Telecommunications Standards Institute) TR (Technical Report) 101, a normal voice conversation can tolerate up to 2% packet loss.

For VoIP in particular, any temporary unavailability of the bearer needs to be compensated by data packet buffering at the terminal in order to compensate for the jitter of the data packet delivery. Jitter may result in choppy voice or temporary glitches, so VoIP devices must implement jitter buffer algorithms to compensate for jitter. Essentially, this means that a certain number of data packets are queued before play-out to the user and the queue length may be increased or decreased over time to reduce the number of discarded, late-arriving packets or to reduce so-called "mouth to ear" delay.

The mechanisms a) and c) listed above for taking fresh keys into use are very likely to add extra delay and jitter for the packet delivery, thus yielding the danger that the total packet delay is not within acceptable boundaries. As described above, a two-way phone conversation like VoIP is quite sensitive to latency, most callers may notice round-trip delays exceeding 250 ms. In addition, mechanism b) is very likely to add additional overhead to the data packet which is also undesired.

In consideration of the above, it is an object of the present invention to overcome one or more of the above drawbacks. In particular, the present invention provides methods, apparatuses, a system and a related computer program product for key change.

According to the present invention, in a first aspect, this object is for example achieved by **a method** comprising:
transceiving a stream of consecutive data packets based on first key information;
detecting a need for an imminent change from the first key information to second key information;
generating, based on the detected need for the imminent change, indication information indicating a specific value of the consecutive data packets from which onward the transceiving of the stream of consecutive data packets is to be based on second key information;
sending the generated indication information; and
transceiving the stream of consecutive data packets based on the indication information and the second key information.

According to further refinements of the invention as defined under the above first aspect,
- the detecting is performed responsive to a handover between network entities;
- the detecting is performed based upon the need for imminent change being signaled by a mobility management entity.

According to the present invention, in a second aspect, this object is for example achieved by **a method** comprising:
transceiving a stream of consecutive data packets based on first key information;
receiving indication information indicating a specific value of the consecutive data packets from which onward the transceiving of the stream of consecutive data packets is to be based on second key information; and
transceiving the stream of consecutive data packets based on the received indication information and the second key information.

According to further refinements of the invention as defined under the above first and second aspects,
- the transceiving of the stream of consecutive data packets based on the indication information and the second key information is commenced upon occurrence of the indicated specific value of the consecutive data packets;
- the specific value is one of a sequence number value and a time stamp, the sequence number value being in accordance with one of packet data convergence protocol, third generation partnership project radio link control, third generation partnership project general packet radio service tunneling protocol, internet protocol security encapsulation security payload, transmission control protocol and user datagram protocol;
- the indication information further comprises an indication of radio resource control key change;
- the indication information constitutes a portion of key change signalling information;
- the key change signalling information is constituted by an authentication and key agreement protocol;
- the first key information and the second key information respectively relate to
at least one of separate access stratum key change and separate non-access stratum key change, or
the non-access stratum key change and an independent key change.

According to the present invention, in a third aspect, this object is for example achieved by **an apparatus** comprising:
means for transceiving a stream of consecutive data packets based on first key information;
means for detecting a need for an imminent change from the first key information to second key information;
means for generating, based on the need for the imminent change detected by the means for detecting, indication information indicating a specific value of the consecutive data packets from which onward the transceiving of the stream of consecutive data packets is to be based on second key information, the means for transceiving being configured to transceive the stream of consecutive data packets based on the indication information and the second key information; and
means for sending the generated indication information.

According to further refinements of the invention as defined under the above third aspect,
- the means for detecting is configured to detect responsive to a handover between network entities;
- the means for detecting is configured to detect based upon the need for imminent change being signaled by a mobility management entity.

According to the present invention, in a fourth aspect, this object is for example achieved by **an apparatus** comprising:
means for transceiving a stream of consecutive data packets based on first key information; and
means for receiving indication information indicating a specific value of the consecutive data packets from which onward the transceiving of the stream of consecutive data packets is to be based on second key information, the means for transceiving being configured to transceive the stream of consecutive data packets based on the received indication information and the second key information.

According to further refinements of the invention as defined under the above third and fourth aspects,
- the means for transceiving the stream of consecutive data packets based on the indication information and the second key information is configured to commence transceiving upon occurrence of the indicated specific value of the consecutive data packets;
- the specific value is one of a sequence number value and a time stamp, the sequence number value being in accordance with one of packet data convergence protocol, third generation partnership project radio link control, third generation partnership project general packet radio service tunneling protocol, internet protocol security encapsulation security payload, transmission control protocol and user datagram protocol;
- the indication information further comprises an indication of radio resource control key change;
- the indication information constitutes a portion of key change signalling information;
- the key change signalling information is constituted by an authentication and key agreement protocol;
- the first key information and the second key information respectively relate to
   at least one of separate access stratum key change and separate non-access stratum key change, or
   the non-access stratum key change and an independent key change;
- the apparatus is implemented as a chipset or module.

According to the present invention, in a fifth aspect, this object is for example achieved by **a system** comprising:
an apparatus according to the above third aspect; and
an apparatus according to the above fourth aspect.

According to the present invention, in a sixth aspect, this object is for example achieved by **a computer program product** comprising code means for performing methods steps of a method according to any one of the above first and second aspects as well as the corresponding further refinements, when run on a computer.

In this connection, it has to be pointed out that the present invention enables one or more of the following:
- Seamless key change in both the base station and the user equipment irrespective of the reason for key change, e.g. triggered by an inter-RAT handover or expiry of key lifetime.
- Small addition of non-security related complexity.
- No addition of data packet delay and/or data packet jitter.
- No increase of the data packet header length.
- Insensitivity of key change indication information with regard to data packet loss.

### BRIEF DESCRIPTION OF THE DRAWINGS

Embodiments of the present invention are described herein below with reference to the accompanying drawings, in which:

Fig. 1 shows respective methods for key change according to the present invention; and

Fig. 2 shows respective apparatuses (e.g. base station/(evolved) node B and user equipment) for key change according to the present invention.

### DETAILED DESCRIPTION OF AN EMBODIMENT OF THE PRESENT INVENTION

An embodiment of the present invention is described herein below by way of example with reference to the accompanying drawings.

The embodiment may be summarized according to the following: e.g. a PDCP (packet data convergence protocol) SN (sequence number) (boundary) value or any other suitable data packet sequence value (see below) may be signaled from an eNB (evolved node B, e.g. a LTE base station) to the UE indicating the first user plane data packet ciphered with the new keys. Furthermore, the signal itself may also indicate the change of RRC (radio resource control) keys. Further, the signal itself may be embedded or picky-packed with other signalling, for example AKA (authentication and key agreement protocol) related signalling.

It is to be noted that for this description, the term "PDCP SN" is an example for the indication information, without restricting the latter term to the special technical or implementation details imposed to the term "PDCP SN", but any protocol using data packet sequence numbers may be used, such as 3GPP RLC (Radio Link Control), 3GPP GTP (GPRS (General Packet Radio Service) Tunneling Protocol), IPSec ESP (Internet Protocol Security Encapsulation Security Payload), TCP (Transmission Control Protocol), UDP (User Datagram Protocol), or the like.

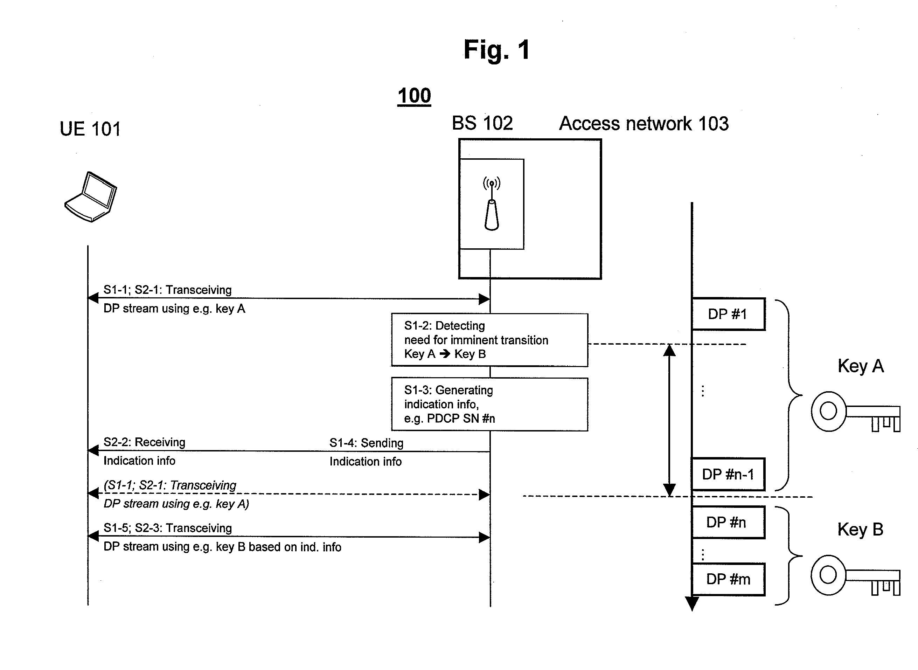

Fig. 1 shows methods for key change (e.g. for BS 102 and UE 101) according to the present invention. Signalling between elements is indicated in horizontal direction, while time aspects between signalling are reflected in the vertical arrangement of the signalling sequence as well as in the sequence numbers.

As shown in Fig. 1, a communication network 100 may comprise a user equipment UE 101, a base station/(evolved) node B (referred to as "BS" hereinafter) 102 and an access network 103. The BS 102 may be a portion of an access entity (not shown) providing access for the UE 101 to the access network 103.

In step S1-1, e.g. the BS 102 may perform transceiving of a stream of consecutive data packets DP#1,...,DP#n-1 based on first key information (e.g. key A). Accordingly, in step S2-1, also the UE 101 may perform transceiving of the stream of consecutive data packets DP#1,...,DP#n-1 based on first key information (e.g. key A).

In step S1-2, e.g. the BS 102 may perform detecting a need for an imminent change from the first key information (e.g. key A) to second key information (key B). The need for an imminent change e.g. during an active session may be detected e.g. by detecting elapse of a predetermined time before expiry of key lifetime, or alternatively, e.g. by detecting that an inter-RAT handover has taken place. As a further alternative, the need for an imminent key change may also be detected by other entities e.g. in the access network 103, and may then be signaled to the BS 102, e.g. upon the need for imminent change being signaled by a mobility management entity. According to still another alternative, the detecting may be performed responsive to a handover between network entities (e.g. other BSs/eNBs).

In step S1-3, e.g. the BS 102 may perform generating of indication information (e.g. PDCP SN) indicating a specific value of the consecutive data packets (e.g. DP#n) based on the detected imminent change, from which data packet (e.g. DP#n) onward the transceiving of the stream of consecutive data packets DP#n,...,DP#m is to be based on the second key information (key B).

In step S1-4, sending of the generated indication information may be performed e.g. by the BS 102. Accordingly, in step 2-2, the indication information sent by the BS 102 may be received e.g. by the UE 101.

As indicated by the italic-printed repetition of the transceiving in steps S1-1 and S2-1 alongside with a dashed two-way arrow, the transceiving of the data packets DP#1,...,DP#n-1 may be performed based on the first key information (e.g. key A) e.g. for all data packets having a specific value below DP#n. It is to be noted that data packets may be transmitted/received out of order, meaning that if a receiver (e.g. the BS 102) obtains e.g. a data packet DP#1,...,DP#n-1 after receiving the data packet DP#n, the receiver may be configured to use e.g. the old key information (e.g. key A) to process the data packets having a specific value (e.g. DP#) below DP#n, but to use e.g. the new key information (e.g. key B) to process the data packets having a specific value (e.g. DP#) of DP#n or above.

In step S1-5, e.g. the BS 102 may perform transceiving of the stream of consecutive data packets DP#n,...,DP#m based on the indication information (e.g. PDCP SN #n) and the second key information (e.g. key B). Accordingly, in step S2-3, also the UE 101 may perform transceiving of the stream of consecutive data packets DP#n,...,DP#m based on the indication information (e.g. PDCP SN #n) and the second key information (e.g. key B).

It is to be noted that the above steps S1-2, S1-3, S1-4 and S1-5 (and S2-3, respectively) may be performed stringently (e.g. in a time gap between data packets DP#n-1 and DP#n, or during transceiving of data packet DP#n-1) or timely spaced (over one or more data packets, or any fractions thereof, as shown in Fig. 1) depending e.g. on processing capabilities of the BS 102 and/or the UE 101 or data packet traffic considerations, as long as it remains ascertained that both the BS 102 and the UE 101 commence transceiving the stream of data packets based on the second key information (e.g. key B) at the same data packet DP#n.

According to further developments of the methods according to the present invention, the specific value may be one of a sequence number value and a time stamp, the sequence number value being in accordance with one of packet data convergence protocol, third generation partnership project radio link control, third generation partnership project general packet radio service tunneling protocol, internet protocol security encapsulation security payload, transmission control protocol and user datagram protocol.

In addition, the indication information may further comprise an indication of radio resource control key change. Alternatively, the indication information may constitute a portion of key change signalling information. In turn, the key change signalling information may be constituted by an authentication and key agreement protocol (e.g. AKA protocol). In addition, the first key information (e.g. key A) and the second key information (e.g. key B) may respectively relate to at least one of separate access stratum key change and separate non-access stratum key change, or the non-access stratum key change and an independent key change.

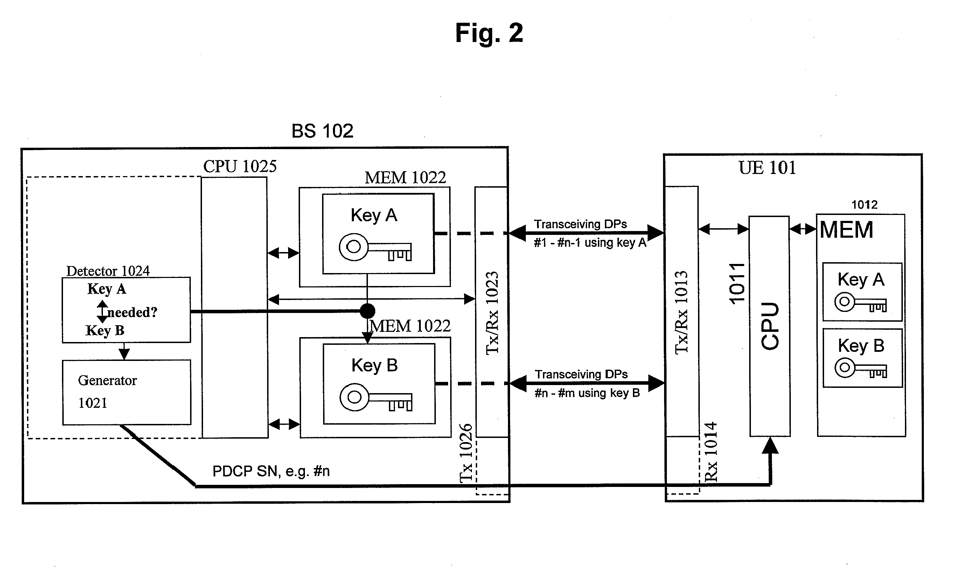

Fig. 2 shows respective apparatuses (e.g. BS 102 and UE 101) for key change according to the present invention. The BS 102 comprises a generator (or means for generating) 1021, a memory 1022, a transceiver (or means for transceiving) Tx/Rx 1023, a detector (or means for detecting) 1024, a central processing unit CPU 1025, and an optional sender (or means for sending) Tx 1026.

The CPU 1025 may be configured to process various data inputs and to control the functions of the generator 1021, the memory 1022, the transceiver 1023, the detector 1024 and the optional sender 1026. In addition, the generator 1021 and the detector 1024 may be individual means e.g. being inserted into the BS 102 as chip-sets. Alternatively, as indicated by the dashed extension of the functional block of the CPU 1025, the generator 1021 and the detector 1024 may also be functional entities being executed by the CPU 1025.

The memory 1022 of the BS 102 serves e.g. for storing code means for carrying out e.g. the method according to the invention, when run on the CPU 1025, and e.g. for storing or holding the first and second key information (e.g. keys A and B). It is to be noted that the transceiver 1023 may be provided as an integral transceiver, but may also be provided as separate sending means and receiving means (not shown).

The means for transceiving 1023 of the BS 102 may be configured, e.g. in conjunction with the memory 1022 and the CPU 1025, to transceive a stream of consecutive data packets DP#1,...,DP#n-1 based on first key information (e.g. key A).

The means for detecting 1024 of the BS 102 may be configured to detect a need for an imminent change from the first key information (e.g. key A) to second key information (e.g. key B). The means for detecting 1024 may be configured to detect the need for imminent change e.g. by detecting elapse of a predetermined time before expiry of key lifetime, or alternatively, e.g. by detecting that an inter-RAT handover has taken place. As a further alternative, the means for detecting may be configured to detect the need for the imminent key change by means of other entities e.g. in the access network 103, which need may then be signaled to the BS 102, e.g. upon the need for imminent change being signaled by a mobility management entity. According to still another alternative, the means for detecting may be configured to detect responsive to a handover between network entities (e.g. other BSs/eNBs).

The means for generating 1021 of the BS 102 may be configured to generate, based on the need for the imminent change detected by the means for detecting 1024, the indication information (e.g. PDCP SN) indicating a specific value of the consecutive data packets (e.g. DP#n) from which onward the transceiving of the stream of consecutive data packets is to be based on second key information (e.g. key B). In that case, the means for transceiving 1023 (e.g. in conjunction with the memory 1022 and the CPU 1025) may be configured to transceive the stream of consecutive data packets DP#n, ..., DP#m based on the indication information (e.g. PDCP SN) and the second key information (e.g. key B).

The means for sending 1026 of the BS 102 may be configured to send the generated indication information. It is to be noted that the means for sending 1026 may be a separate means, or alternatively the sending capability of the transceiver 1023.

As also shown in Fig. 2, the UE 101 comprises a central processing unit CPU 1011, a memory 1012, a transceiver (or means for transceiving) Tx/Rx 1013 and an optional receiver Rx 1014. The CPU 1011 may be configured to process various data inputs and to control the functions of the memory 1012, the transceiver 1013 and the optional receiver 1014.

The memory 1012 serves e.g. for storing code means for carrying out e.g. the method according to the invention, when run on the CPU 1011, and e.g. for storing or holding the first and second key information (e.g. keys A and B). It is to be noted that the transceiver 1013 may be provided as an integral transceiver, but may also be provided as separate sending means and receiving means (not shown).

The means for transceiving 1013 of the UE 101 e.g. in conjunction with the CPU 1011 and the transceiver 1013 may be configured to transceive a stream of consecutive data packets DP#1,...,DP#n-1 based on first key information (key A).

And, the means for receiving 1014 may be configured to receive the indication information (e.g. PDCP SN) indicating a specific value of the consecutive data packets (DP#n) from which onward the transceiving of the stream of consecutive data packets DP#n,...,DP#m is to be based on second key information (e.g. key B). In that case, the means for transceiving 1013 (e.g. in conjunction with the CPU 1011 and the memory 1012) may be configured to transceive the stream of consecutive data packets DP#n,...,DP#m based on the received indication information (e.g. PDCP SN #n) and the second key information (e.g. key B).

It is to be noted that the means for receiving 1014 may be a separate means, or alternatively the receiving capability of the transceiver 1013.

According to further developments of the apparatuses (e.g. BS 102 and UE 101) according to the present invention, the specific value may be one of a sequence number value and a time stamp, the sequence number value being in accordance with one of packet data convergence protocol, third generation partnership project radio link control, third generation partnership project general packet radio service tunneling protocol, internet protocol security encapsulation security payload, transmission control protocol and user datagram protocol.

In addition, the indication information may further comprise an indication of radio resource control key change. Alternatively, the indication information may constitute a portion of key change signalling information. In turn, the key change signalling information may be constituted by an authentication and key agreement protocol (e.g. AKA protocol). In addition, the first key information (e.g. key A) and the second key information (e.g. key B) may respectively relate to at least one of separate access stratum key change and separate non-access stratum key change, or the non-access stratum key change and an independent key change.

Furthermore, the BS 102 and/or the UE 101 according to the present invention may also be implemented as a chipset or module.

In addition, the present invention also relates to a system which may comprise both the BS 102 and the UE 101.

[Further embodiments]

For the purpose of the present invention as described herein above, it should be noted that
- an access technology may be any technology by means of which a user equipment can access an access network (or base station, respectively). Any present or future technology, such as WLAN (Wireless Local Access Network), WiMAX (Worldwide Interoperability for Microwave Access), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.
- an access network may be any device, unit or means by which a station entity or other user equipment may connect to and/or utilize services offered by the access network; such services include, among others, data and/or (audio-) visual communication, data download etc.;
- generally, the present invention is applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M)IPv4/6, is also applicable;
- a user equipment may be any device, unit or means by which a system user may experience services from an access network;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at a user equipment or base station, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, units or means (e.g. user equipment and base station) can be implemented as individual devices, units or means, but this does not exclude that they are implemented in a distributed fashion throughout the system, as long as the functionality of the device, unit or means is preserved.

## Claims

1. A method, comprising:
transceiving a stream of consecutive data packets based on first key information;
detecting a need for an imminent change from the first key information to second key information;
generating, based on the detected need for the imminent change, indication information indicating a specific value of the consecutive data packets from which onward the transceiving of the stream of consecutive data packets is to be based on second key information;
sending the generated indication information; and
transceiving the stream of consecutive data packets based on the indication information and the second key information.

2. The method according to claim 1, wherein the detecting is performed responsive to a handover between network entities.

3. The method according to claim 1, wherein the detecting is performed based upon the need for imminent change being signaled by a mobility management entity.

4. A method, comprising:
transceiving a stream of consecutive data packets based on first key information;
receiving indication information indicating a specific value of the consecutive data packets from which onward the transceiving of the stream of consecutive data packets is to be based on second key information; and
transceiving the stream of consecutive data packets based on the received indication information and the second key information.

5. The method according to any one of claims 1 to 4, wherein the transceiving of the stream of consecutive data packets based on the indication information and the second key information is commenced upon occurrence of the indicated specific value of the consecutive data packets.

6. The method according to any one of claims 1 or 3 to 5, wherein the specific value is one of a sequence number value and a time stamp, the sequence number value being in accordance with one of packet data convergence protocol, third generation partnership project radio link control, third generation partnership project general packet radio service tunneling protocol, internet protocol security encapsulation security payload, transmission control protocol and user datagram protocol.

7. The method according to claim 6, wherein the indication information further comprises an indication of radio resource control key change.

8. The method according to claim 6, wherein the indication information constitutes a portion of key change signalling information.

9. The method according to claim 8, wherein the key change signalling information is constituted by an authentication and key agreement protocol.

10. The method according to any one of the preceding claims, wherein the first key information and the second key information respectively relate to
at least one of separate access stratum key change and separate non-access stratum key change, or
the non-access stratum key change and an independent key change.

11. An apparatus, comprising:
means for transceiving a stream of consecutive data packets based on first key information;
means for detecting a need for an imminent change from the first key information to second key information;
means for generating, based on the need for the imminent change detected by the means for detecting, indication information indicating a specific value of the consecutive data packets from which onward the transceiving of the stream of consecutive data packets is to be based on second key information, the means for transceiving being configured to transceive the stream of consecutive data packets based on the indication information and the second key information; and
means for sending the generated indication information.

12. The apparatus according to claim 11, wherein the means for detecting is configured to detect responsive to a handover between network entities.

13. The apparatus according to claim 11, wherein the means for detecting is configured to detect based upon the need for imminent change being signaled by a mobility management entity.

14. An apparatus, comprising:
means for transceiving a stream of consecutive data packets based on first key information; and
means for receiving indication information indicating a specific value of the consecutive data packets from which onward the transceiving of the stream of consecutive data packets is to be based on second key information, the means for transceiving being configured to transceive the stream of consecutive data packets based on the received indication information and the second key information.

15. The apparatus according to any one of claims 11 to 14, wherein the means for transceiving the stream of consecutive data packets based on the indication information and the second key information is configured to commence transceiving upon occurrence of the indicated specific value of the consecutive data packets.

16. The apparatus according to any one of claims 11 or 13 to 15, wherein the specific value is one of a sequence number value and a time stamp, the sequence number value being in accordance with one of packet data convergence protocol, third generation partnership project radio link control, third generation partnership project general packet radio service tunneling protocol, internet protocol security encapsulation security payload, transmission control protocol and user datagram protocol.

17. The apparatus according to claim 16, wherein the indication information further comprises an indication of radio resource control key change.

18. The apparatus according to claim 16, wherein the indication information constitutes a portion of key change signalling information.

19. The apparatus according to claim 18, wherein the key change signalling information is constituted by an authentication and key agreement protocol.

20. The apparatus according to any one of claims 11 to 19, wherein the first key information and the second key information respectively relate to
at least one of separate access stratum key change and separate non-access stratum key change, or
the non-access stratum key change and an independent key change.

21. The apparatus according to any one of claims 11 to 20, wherein the apparatus is implemented as a chipset or module.

22. A system, comprising:
an apparatus according to claim 11; and
an apparatus according to claim 14.

23. A computer program product comprising code means for performing methods steps of a method according to any one of claims 1 to 10, when run on a computer.
